# EUROPEAN PATENT APPLICATION

(11) **EP 3 059 927 A1**
(43) Date of publication of application: **24.08.2016**
(21) Application number: 15155691.7
(22) Date of filing: 19.02.2015
(51) Int. Cl.: H04L 29/08

(54) **Method and system for file processing**

(71) Applicant: MasterCard International Incorporated, Purchase, NY 10577-2509 (US)
(72) Inventor: Gredon, Lauren, Dublin 22 (IE)
(74) Representative: Karl, Christof

(57) **Abstract**

The invention relates to a method and system of processing a file containing record data. The method comprising splitting the record data into several record data parts and storing the record data parts in a database, for each of the record data parts, adding an entry identifying the record data part to one of one or more queues, for each of the entries added to the one or more queues, retrieving the entry and processing the record data part identified by the entry by one of a plurality of processing servers. The invention further describes comprising a database for system for the same.

## Description

### Field of the invention

The present invention relates to an information processing method and system. In particular, the present invention describes a method and system for efficiently processing a file containing record data.

### Background

File processing systems require the use of file processing servers which are capable of processing the file provided. In existing real time file processing systems, there is a requirement for providing a processing server which is capable of processing all the files. For example, when a large number of users upload files online for processing, there is considerable demand on the server which is processing the file. A file may comprise multiple records which are processed one after another by the same processor. Therefore, it is necessary to design and configure the system in advance taking into consideration the load factor that the processing server may encounter. However, it is not always possible to determine in advance the load on the processing server. Therefore, there is a requirement to provide scalability of servers to enable distributed processing while also maintaining integrity by avoiding multiple processing.

### Summary of the invention

The above objective is achieved by providing more processing servers where required and removing the processing servers when not required. In particular, the present invention provides a solution by providing a system and method where a raw file comprising multiple records is processed concurrently in a distributed architecture by multiple processing servers.

A first embodiment of the invention is related to a method of processing a file containing record data, comprising the steps of splitting the record data into several record data parts and storing the record data parts in a database. For each of the record data parts, an entry identifying the record data part is added to one of one or more queues. For each of the entries added to the one or more queues, the entry is retrieved and the record data part identified by the entry is processed by one of a plurality of processing servers.

By splitting the file and storing the parts individually in the database, it is possible to process the parts separately, thereby allowing multiple file processing at the same time. Adding an entry into a queue provides any processor the possibility to retrieve the data and process only the retrieved data from the database. The method according to the invention leads to a more scalable and distributed model in which servers can be added and removed depending on the load.

A database is an organized collection of data. Database management systems (DBMSs) are computer software applications that interact with the user, other applications, and the database itself to capture and analyze data. Existing general-purpose DBMSs are designed to allow the definition, creation, querying, update, and administration of databases. Administration of a database includes enforcing data security, maintaining data integrity, dealing with concurrency control, and recovering information that has been corrupted by some event such as an unexpected system failure. In the present invention, access by the processing servers to the data stored in the database is (typically) done through a DBMS. Storing the different data parts of the file to be processed in a database allows taking advantage of the above-mentioned features of existing DBMSs, to ensure integrity of data such that no two processors can access and process the same data from the database.

According to a second embodiment of the invention, in the method according to the first embodiment, an entry identifying a record data part is a primary key for the record data part stored in the database. The primary key by definition uniquely identifies entries of a database and is therefore suitable for serving as an entry in the queue which identifies a record data part stored in the database. Furthermore, by using the primary key as an entry identifying the data, features of existing databases or database management systems are triggered by which transactional security is maintained by implicitly locking the unprocessed record in the database when retrieving to process thereby ensuring that no other server is processing at the same time.

According to a third embodiment of the invention, in the method according to any of the first or second embodiments, the file additionally contains header data comprising common data relating to several record data parts. The header data contains common information of the record data thereby reducing the amount of information on each record and thus the need to process it repeatedly.

According to a fourth embodiment of the invention, the method according to the third embodiment further comprises the steps of storing the header data in the database, adding one or more entries identifying the header data to one or more queues, and for each of the entries identifying the header data, retrieving the entry and processing the header data identified by the entry by one of the plurality of processing servers. By storing the header in the database, it is possible to process the header data and thereby allow header processing of multiple files at the same time. Adding an entry into a queue provides any processor the possibility to retrieve the data and process only the retrieved data from the database.

According to a fifth embodiment of the invention, in the method according to the fourth embodiment of the invention, an entry identifying header data is a primary key for that header data stored in the database. The primary is suitable for serving as an entry in the queue which identifies header data stored in the database. Furthermore, by using the primary key as an entry identifying the data, features of existing databases or database management systems are triggered by which transactional security is maintained by implicitly locking the unprocessed header data in the database when retrieving to process thereby ensuring that no other server is processing at the same time.

According to a sixth embodiment of the invention, in the method a according to the fourth or fifth embodiment, the one or more queues to which the one or more entries identifying the header data are added are separate from the one or more queues to which the entries identifying the record data parts are added. This ensures that a queue only has entries to particular data, thereby avoiding a processor from mistakenly processing other data from the queue and only processing the data according to a predetermined order and maintaining the integrity of data.

According to a seventh embodiment of the invention, in the method according to any one of the third to sixth embodiment, the entries identifying the record data parts are added to the one or more queues only after the header data has been processed. This ensures that the data is processed in order so that all the common data is processed which is required for processing record data prior to processing the record data.

According to an eight embodiment of the invention, the method according to the seventh embodiment, when embodying the fourth embodiment, further comprises the step of on successful processing of the header data, transmitting the processed header data to the database with information indicating the start of the processing of the record data parts. This ensures that the system knows that the transmission of the entries identifying the record data parts to the queues can now start.

According to a ninth embodiment of the invention, in the method according to any one of the preceding embodiments, the file additionally contains trailer data comprising data for indicating whether the processing of the file is complete.

According to a tenth embodiment of the invention, the method according to the ninth embodiment of the invention further comprises the steps of storing the trailer data in the database, adding one or more entries identifying the trailer data to one or more queues, and for each of the entries identifying the trailer data, retrieving the entry and processing the trailer data identified by the entry by one of the plurality of processing servers. By storing the trailer in the database, it is possible to process the trailer data and thereby allow trailer processing of multiple files at the same time. Adding an entry into a queue provides any processor the possibility to retrieve the data and process only the retrieved data from the database.

According to an eleventh embodiment of the invention, in the method according to the tenth embodiment of the invention, an entry identifying trailer data is a primary key for that trailer data stored in the database. The primary is suitable for serving as an entry in the queue which identifies trailer data stored in the database. Furthermore, by using the primary key as an entry identifying the data, features of existing databases or database management systems are triggered by which transactional security is maintained by implicitly locking the unprocessed trailer data in the database when retrieving to process thereby ensuring that no other server is processing at the same time.

According to a twelfth embodiment of the invention, in the method according to the any one of the tenth or eleventh embodiments, the one or more queues to which the one or more entries identifying the trailer data are added are separate from the one or more queues to which the entries identifying the record data parts are added.

According to a thirteenth embodiment of the invention, in the method according to any one of the tenth to twelfth embodiments, when embodying the fourth embodiment, the one or more queues to which the one or more entries identifying the trailer data are added are separate from the one or more queues to which the one or more entries identifying the header data are added.

This ensures that a queue only has entries to particular data, thereby avoiding a processor from mistakenly processing other data from the queue and only processing the data according to a predetermined order and maintaining the integrity of data.

According to a fourteenth embodiment of the invention, in the method according to any of the tenth to thirteenth embodiments of the invention, when embodying the third embodiment, the one or more entries identifying the trailer data are added to the one or more queues only after the header data has been processed.

According to a fifteenth embodiment of the invention, the method according to any one of the tenth to fourteenth embodiments of the invention, the trailer data identified by the one or more entries is processed by the processing servers only after the record data parts have been processed. Since the trailer data indicates the status of the processing, processing the trailer data after processing of the header data and record data ensures that the trailer data is processed in order to correctly indicate the processing status of the file.

According to a sixteenth embodiment of the invention, in the method according to the fifteenth embodiment, the trailer data identified by the one or more entries is processed by the processing servers after a predetermined time after adding the one or more entries identifying the trailer data to the one or more queues. This delay is provided so that all record data parts can be processed before the trailer data is processed in order to ensure that the status of processing is correctly provided.

According to a seventeenth embodiment of the invention, in the method according to any of the preceding embodiments, an entry from a queue is retrieved by a processing server either by periodically polling the queue by the processing server or by the entry being pushed to the processing server. By providing a periodic polling of the queue, the processing servers can ensure that the data is processed immediately without a delay and also using the processing time efficiently. On the other hand, using the push mechanism by the queue to push the data to the processing server ensures that the processing server does not have to keep polling for a long duration.

According to an eighteenth embodiment of the invention, in the method according to any one of the preceding embodiments of the invention, the processing server retrieves an entry from the queue depending on whether or not the processor is currently free to process. By doing so, the processing servers can ensure that the data is processed utilizing the processing time efficiently.

According to a nineteenth embodiment of the invention, in the method according to any of the preceding embodiments, when a processing server retrieves an entry and while it processes the data identified by the entry, the database locks access to the data to avoid duplicate processing of the data. This provides for maintaining integrity of data such that no two processors can access and process the same data from the database at the same time.

According to a twentieth embodiment of the invention, in the method according to any of the preceding embodiments of the invention, the processing servers access the data stored in the database through a database management system (DBMS).

According to a twenty first embodiment of the invention, in the method according to the twentieth embodiment of the invention, the database management system is designed to allow enforcement of data security, maintaining data integrity, dealing with concurrency control, and/or recovering of information that has been corrupted by some event such as an unexpected system failure. Since many existing DBMSs already have such administration features, a system according to the invention which allows for data integrity and which ensures that no two processors can access and process the same data from the database at the same time can be implemented easily and in a cost-efficient manner, taking advantage of the features of such existing DBMSs. In particular, transactional security can be maintained by implicitly locking the an unprocessed record in the database when retrieving it to process, thereby ensuring that no other server is processing it at the same time. As mentioned above, this can be achieved, e.g., by using as an identifier added to the queues the primary key identifying the row and pointing to the record to be processed.

According to a twenty second embodiment of the invention, in the method according to any of the preceding embodiments of the invention, the database contains, for a data part in the database identified by an entry in a queue, information regarding the time when the most recent attempt to process the data part was made. This provides for further integrity of the data. The database maintains a retry count which counts the number of attempts and a pickup data value which maintains a timestamp with the date and time when the last attempt to access the data was made.

A twenty third embodiment of the invention is related to a computer program having instructions which when executed by a computing system cause the computing system to perform the method according to any of the first to twentieth embodiments.

A twenty fourth embodiment of the invention relates to a system for processing a file comprising a database and a plurality of processing servers, the system being configured to perform the method according to any of the first to twentieth embodiments.

### Brief description of the drawings

The present invention is further described in the detailed description which follows, in reference to the noted plurality of drawings, by way of non-limiting examples of preferred embodiments of the present invention, in which like reference signs represent like elements throughout the views of the drawings. In the following, the numbering of the embodiments does not coincide with the number of the embodiments in the above summary of the invention.
- Fig.1: illustrates an overall system implementing the present invention.
- Fig.2: illustrates a schematic flow diagram of an embodiment of the method of the present invention.

### Detailed description of preferred embodiments

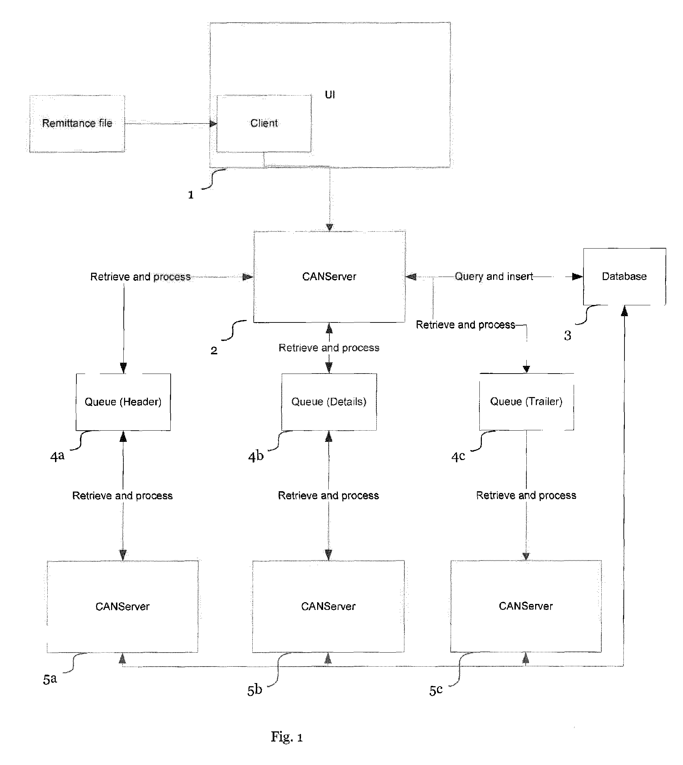

The present invention will now be described in accordance with the system shown in Fig.1. The system for file processing is provided with a user interface on a client computer (1). The user interface allows the user to upload a file to the system. The client devices may be connected to a server through the Internet or locally, and the file uploading may be implemented through an API on the client device or by another mode. However, as a skilled person will understand that the file can be provided for processing through other means.

In the present embodiment, the file is a remittance file comprising multiple remittance records for performing transactions. A remittance file is merely used as an example as it illustrates a file with multiple records which require a high level of data integrity. However, a skilled person will understand that this system is not limited to such a file but any file having multiple records or which can be sub divided into multiple parts so that each part can be processed independently. The file contains three components, namely header data, record data and trailer data, functions of which will be explained in detail subsequently. In the present example, the remittance file can contain up to twenty thousand records containing payment information.

The file is processed by a server (2) to split and store the components in a database (3). In the present embodiment, the server is a CANserver (Current Account Number Server); however any other server which performs the functions of the server can be used for the present invention. The database (3) is connected to the server for storing the different components of the file and the multiple records containing payment information, for example.

One or more queues (4a, 4b, 4c) are provided and are connected to the server. A plurality of processing servers (5a, 5b, 5c) is connected to the queues and the database. A processing server could be the server (1) which also performs the function of a processing server. In the present invention, the processing servers implement the Java Messaging Service functionality which enables the processing servers to listen to the queues, e.g. by periodically polling the queues. However, the queue can also be configured to send the information periodically to the processing server by pushing.

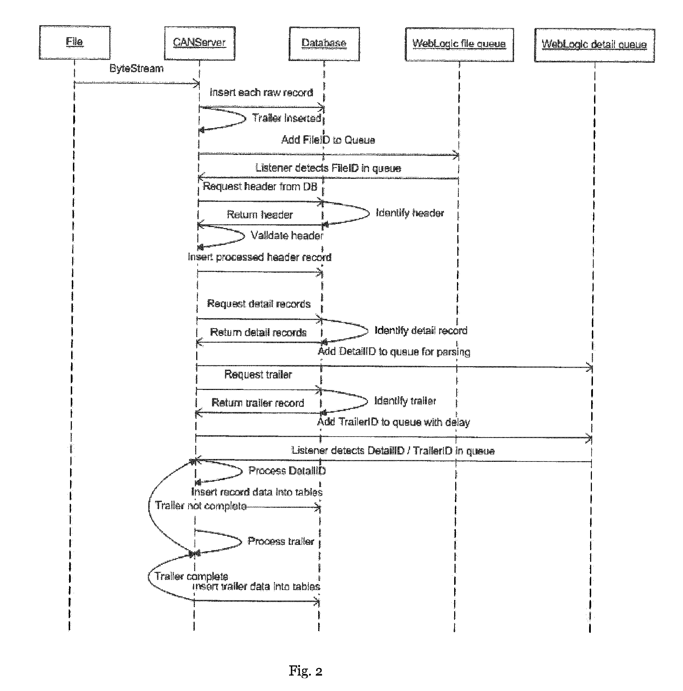

Now the method implemented by the system will be explained in detail with reference to the flow diagram of Fig.2.

A file is provided to the server through the user interface provided on the client system. The server then splits the file into raw data parts comprising one or more header data parts, several record data parts and one or more trailer data parts. The record data comprises multiple records. The record data parts along with the header data (parts) and trailer data (parts) are stored in the database (3).

### Header data processing

The header data comprises common data relating to several record data parts. For example, in the remittance file, the header data may include common data such as currency details, date, etc. The server adds one or more entries identifying the header data to a header queue. In the present embodiment, the entry identifying header data is a primary key for that header data stored in the database and the primary key acts as a link to the particular data on the database. The header queue is one of the different queues, and is provided as a separate queue in the system. However, it is not necessary that a separate queue is provided but a single queue which performs the function of different queues can be provided instead.

The processing servers (5a, 5b, 5c) which process the header data listen to the header queue to see if there are new entries identifying header data. As soon as one of the processing servers retrieves an entry identifying header data, the header data which is identified by the entry is processed by the processing server. The processing server queries the database for the appropriate header data relating to the entry and then processes the header data on the database. The database identifies the header relating to the entry and returns the header data for processing. When the processing server processes the data identified by the entry, the database locks access to the data to avoid duplicate processing of the data. After completion of the processing of the header data, the server writes back the processed header data to the database and confirms the processing of the header data.

### Record data processing

Following the successful processing of the header data, the server retrieves from the database the entries identifying the record data parts to be added to one or more queues. An entry identifying a record data part is a primary key for the record data part stored in the database. A record data part of the file in the particular embodiment is information concerning a transaction which needs to be processed. It may contain information such as the beneficiary's name, address, bank account and the amount to be remitted.

The server then adds one or more entries identifying the record data part to a record queues (4b), which can also be called "detail queue". It must be noted that the entries identifying the record data parts are added to the queue and processed only after the header data has been processed.

In the present invention, an entry identifying a record data part is a primary key for that record data part stored in the database, and the primary key acts as a link to the particular data on the database. Similar to the header queue, the record queue is one of the different queues provided as a separate queue in the system. In the present embodiment, the record queue is separate from the header queue. However, it is not necessary that a separate queue is provided and a single queue which performs a function of different queues can be provided instead.

The processing servers (5b) which processes the record data parts listen to the record queue for entries identifying record data. One of the processing servers retrieves an entry from the queue depending on whether or not the processor is currently free to process. As soon as the processing server retrieves the entry identifying a record data part, the record data part which is identified by the entry is processed by the processing server. The processing server queries the database for the appropriate record data part relating to the entry and then processes the record data part on the database. The database identifies the record data part relating to the entry and returns the record data part for processing. More than one processing server can simultaneously read the entries from the queue, access the database and simultaneously process record data parts. This providing of multiple processing servers which can simultaneously read the database and process the data allows for scalability of processing by adding more processing server when necessary.

The present invention also provides for maintaining integrity of data such that no two processors can access and process the same data from the database. When a processing server processes the data identified by the entry, the database locks access to the data to avoid duplicate processing of the data. For further integrity of the data, the database maintains a retry count which counts the number of attempts and a pickup data value which maintains a timestamp with the date and time when the last attempt to access the data was made.

### Trailer data processing

Trailer data is provided which indicates whether the processing of the file is complete. After completion of the processing of the header data, the server inserts processed header data to the database to confirm the processing of the header data. Only after the header data has been processed, the server adds one or more entries identifying the trailer data to a trailer queue (4c). In the present embodiment, the entry identifying trailer data is a primary key for that trailer data stored in the database, and the primary key acts as a link to the particular data on the database. The trailer queue is one of the different queues provided as a separate queue in the system. In the present embodiment, the trailer queue is separate from the header queue and the record queue. However, it is not necessary that a separate queue is provided, and a single queue which performs the function of different queues can be provided instead.

The processing servers (5a, 5b, 5c) which process the trailer data listen to the trailer queue for entries identifying trailer data. However, the processing servers retrieve and process the trailer data identified by the one or more entries only after a predetermined time after the entries are added to the queue. This delay is provided so that all record data parts can be processed before the trailer data is processed. One of the processing servers then retrieves an entry from the queue and processes trailer data. This means that on successful completion of the processing of all the record data parts, the trailer data is processed and the completed trailer data is then recorded on the database. In the absence of successful completion, the trailer data is marked as not completed. This will initiate further processing of the remaining uncompleted record processing by other processing servers.

In all the above, the processing servers retrieve the entry from the queue depending on whether or not the processor is currently free to process. The processing server is capable of processing all the data and does not have to be a standalone processing server for processing different data components such as header, record and trailer data. The same mechanism used for maintaining integrity of the data when processing the record data is also implemented for maintaining the integrity of other data types.

As a skilled person will understand, this method and system can be used on any file processing intensive task where the file can be sub-divided into multiple parts capable of being processed concurrently. The components of header, trailer and record are merely used as examples and other data types may be provided and implemented in the present invention.

## Claims

1. A method of processing a file containing record data, comprising the steps of:
splitting the record data into several record data parts and storing the record data parts in a database,
for each of the record data parts, adding an entry identifying the record data part to one of one or more queues,
for each of the entries added to the one or more queues, retrieving the entry and processing the record data part identified by the entry by one of a plurality of processing servers.

2. The method as claimed in claim 1, wherein an entry identifying a record data part is a primary key for the record data part stored in the database.

3. The method as claimed in any one of claims 1 or 2, wherein the file additionally contains header data comprising common data relating to several record data parts, and the method further comprises the steps of:
storing the header data in the database,
adding one or more entries identifying the header data to one or more queues, and
for each of the entries identifying the header data, retrieving the entry and processing the header data identified by the entry by one of the plurality of processing servers.

4. The method as claimed in claim 3, wherein an entry identifying header data is a primary key for that header data stored in the database.

5. The method as claimed in any one of claims 3 or 4, wherein the entries identifying the record data parts are added to the one or more queues only after the header data has been processed.

6. The method as claimed in claim 5, further comprising the step of:
on successful processing of the header data, transmitting the processed header data to the database with information indicating the start of the processing of the record data parts.

7. The method as claimed in any one of the preceding claims, wherein the file additionally contains trailer data comprising data for indicating whether the processing of the file is complete, and the method further comprises the steps of:
storing the trailer data in the database,
adding one or more entries identifying the trailer data to one or more queues, and
for each of the entries identifying the trailer data, retrieving the entry and processing the trailer data identified by the entry by one of the plurality of processing servers.

8. The method as claimed in claim 7, wherein an entry identifying trailer data is a primary key for that trailer data stored in the database.

9. The method as claimed in any one of claims 7 or 8, when depending from claim 3, wherein the one or more entries identifying the trailer data are added to the one or more queues only after the header data has been processed.

10. The method as claimed in any one of claims 7 to 9, wherein the trailer data identified by the one or more entries is processed by the processing servers only after the record data parts have been processed, and after a predetermined time after adding the one or more entries identifying the trailer data to the one or more queues.

11. The method as claimed in any one of the preceding claims, wherein, when a processing server retrieves an entry and while it processes the data identified by the entry, the database locks access to the data to avoid duplicate processing of the data.

12. The method as claimed in any one of the preceding claims, wherein the processing servers access the data stored in the database through a database management system which is designed to allow enforcement of data security, maintaining data integrity, dealing with concurrency control, and/or recovering information that has been corrupted by some event such as an unexpected system failure.

13. The method as claimed in any one of the preceding claims, wherein the database contains, for a data part in the database identified by an entry in a queue, information regarding the time when the most recent attempt to process the data part was made.

14. Computer program having instructions which when executed by a computing system cause the computing system to perform the method according to any one of claims 1 to 13.

15. A system for processing a file comprising a database and a plurality of processing servers, the system being configured to perform the method according to any one of claims 1 to 14.
